# FASCICULE DE BREVET EUROPEEN

(11) **EP 4 346 227 B1**
(45) Date de publication et mention de la délivrance du brevet: **25.06.2025**
(21) Numéro de dépôt: 23306605.9
(22) Date de dépôt: 27.09.2023
(51) Int. Cl.: H04Q 9/00

(54) **DISPOSITIF ET PROCÉDÉ DE TRANSMISSION EN MODE POUSSÉ, ET PRODUIT PROGRAMME D'ORDINATEUR ASSOCIÉ**
VORRICHTUNG UND VERFAHREN ZUR ÜBERTRAGUNG IM HOCHMODUS UND COMPUTERPROGRAMMPRODUKT DAFÜR
HIGH-MODE TRANSMISSION DEVICE, HIGH-MODE TRANSMISSION METHOD, AND COMPUTER PROGRAM PRODUCT

(30) Priorité: 28.09.2022 FR 2209834
(43) Date de publication de la demande: 03.04.2024
(73) Titulaire: Sagemcom Energy & Telecom SAS, 92270 Bois-Colombes (FR)
(72) Inventeur: ROTER, Ziv, 92500 Rueil-Malmaison (FR)
(74) Mandataire: Novagraaf Technologies

(56) Documents cités:
- EP-A1- 3 945 725
- FR-A1- 3 100 095

## Description

### Domaine technique

Sont décrits un procédé de transmission en mode poussé de données, un dispositif de mise en œuvre du procédé et un produit programme d'ordinateur associé, pouvant être utilisés, de façon non limitative, dans le cadre d'une transmission de données collectées de façon récurrente.

### Arrière-plan technique

Dans de nombreuses applications, des dispositifs accumulent des données de façon périodique ou non-périodique nécessitant une collecte, par un dispositif client récepteur, des données accumulées par un dispositif serveur producteur. Tel est par exemple le cas de compteurs de nature diverse, tels que les compteurs électriques, de gaz, d'eau ou encore d'énergie thermique. La quantité de données produites par un tel dispositif pendant un intervalle de temps donné n'est pas toujours prévisible. Un dispositif peut générer des données périodiques, par exemple une valeur mesurée par le compteur à un instant donné et enregistrée une fois par période. Cependant en cas de problème de génération des données, des périodes sans données peuvent exister. Les dispositifs peuvent également générer des données apériodiques, par exemple sous la forme d'un journal d'événements. Dans ces cas, la quantité de données est imprévisible par nature.

Il existe un besoin d'un procédé de transmission efficace prenant en compte ces aspects.

Le document EP 3945725 A1 décrit un procédé de transmission de mesures permettant de réduire la charge du réseau.

### Résumé

Un ou plusieurs modes de réalisation concernent un procédé de transmission en mode poussé mis en œuvre par un dispositif émetteur comprenant une mémoire comportant du code logiciel et un processeur qui, quand il exécute le code logiciel, conduit le dispositif à mettre en œuvre le procédé, le procédé comprenant :
(a) le déclenchement d'une transmission, à un dispositif récepteur, de valeurs d'un attribut adapté pour contenir des données ordonnées dont les valeurs constituent la totalité ou un sous-ensemble, une transmission contenant au plus les valeurs d'un unique intervalle de sélection des données ordonnées;
(b) la vérification que l'attribut ne comporte aucune valeur à transmettre pour l'ensemble de N intervalles adjacents de sélection de données d'un point de départ de sélection dans l'ordre des données et jusqu'à la fin de l'intervalle précédant l'intervalle comprenant une période de collecte de données en cours, avec N entier;
(c) si la vérification est positive, une transmission d'un unique message indicatif de l'absence de valeurs pour les N intervalles.

Selon un ou plusieurs modes de réalisation particuliers, si la vérification est négative, la transmission en mode poussé au dispositif récepteur d'un message comportant les valeurs du premier intervalle non vide de valeurs à transmettre, aucun message n'étant transmis pour les intervalles vides de valeurs à transmettre précédant ledit premier intervalle.

Selon un ou plusieurs modes de réalisation particuliers, le procédé comprend, suite à la transmission du message comportant des valeurs, la réception d'un acquittement de la part du dispositif récepteur et de la mise à jour d'une information identifiant la dernière valeur acquittée pour l'attribut.

Selon un ou plusieurs modes de réalisation particuliers, le point de départ dans l'ordre des données est adjacent à la fin de l'intervalle comportant la valeur la plus récente acquittée par le dispositif récepteur.

Selon un ou plusieurs modes de réalisation particuliers, le point de départ dans l'ordre des données est compté à partir de la valeur la plus récente acquittée par le dispositif récepteur.

Selon un ou plusieurs modes de réalisation particuliers, l'étape de détermination est précédée d'une étape de filtrage des données de l'attribut selon un ou plusieurs critères en vue de déterminer lesdites valeurs à transmettre.

Selon un ou plusieurs modes de réalisation particuliers, la vérification porte sur plusieurs attributs et des ensembles d'intervalles respectifs, la vérification étant considérée comme positive pour l'étape (c) en cas d'absence de valeurs à transmettre pour chacun des attributs.

Selon un ou plusieurs modes de réalisation particuliers, dans lequel l'unique message indicatif de l'absence de valeurs pour les N intervalles comporte un tableau vide.

Selon un ou plusieurs modes de réalisation particuliers, N est supérieur ou égal à deux.

Selon un ou plusieurs modes de réalisation particuliers, les données sont ordonnées de la donnée la plus ancienne à la donnée la plus récente.

Selon un ou plusieurs modes de réalisation particuliers, les données comportent un horodatage, l'ordre étant fonction de l'horodatage.

Selon un ou plusieurs modes de réalisation particuliers, l'intervalle de sélection est l'un parmi un intervalle défini par un nombre de valeurs ou un intervalle défini par une durée.

Selon un ou plusieurs modes de réalisation, un intervalle temporel comporte une ou plusieurs périodes de collecte de données correspondant à une profondeur de sélection des données
Un ou plusieurs modes de réalisation concernent un support d'enregistrement lisible par un dispositif muni d'un processeur, ledit support comprenant des instructions qui, lorsque le programme est exécuté par un processeur d'un dispositif, conduisent le dispositif à mettre en oeuvre d'au moins un des procédés décrit.

Un ou plusieurs modes de réalisation concernent un dispositif de communication comprenant des moyens adaptés à la mise en oeuvre d'au moins un des procédés décrit.

### Brève description des figures

D'autres caractéristiques et avantages apparaitront au cours de la lecture de la description détaillée qui va suivre pour la compréhension de laquelle on se reportera aux dessins annexés parmi lesquels :
- la figure 1 est un diagramme bloc d'un système comprenant un dispositif serveur et un dispositif client selon un ou plusieurs modes de réalisation ;
- la figure 2a est une première partie d'un algorigramme d'un procédé de poussée de données selon un ou plusieurs exemples de réalisation ;
- la figure 2b est une seconde partie d'un algorigramme d'un procédé de poussée de données selon un ou plusieurs exemples de réalisation.

### Description détaillée

Dans la description qui va suivre, des éléments identiques, similaires ou analogues seront désignés par les mêmes chiffres de référence.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en oeuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en oeuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire ou un support lisible accessible directement ou à travers un autre module par le processeur ou contrôleur.

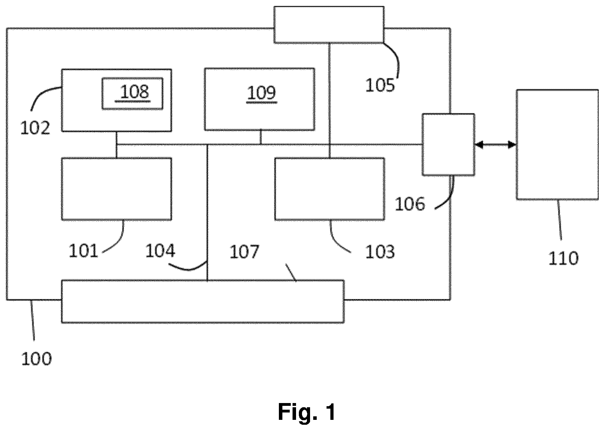

La figure 1 est un diagramme bloc d'un réseau de communication comprenant un dispositif 100 et un dispositif 110 aptes à communiquer à travers le réseau de façon bidirectionnelle. Le dispositif 100 est un dispositif qui stocke des données accumulées ou accumule lui-même des données, données dont au moins certaines sont à transmettre au dispositif 110. On appellera par la suite le dispositif 100 'serveur' et le dispositif 110 'client'. Par exemple, le serveur 100 est un compteur d'électricité, d'eau, de gaz, d'énergie thermique... tandis que le client 110 est un dispositif collectant les données de différents serveurs pour le compte de l'opérateur du réseau de distribution. Le serveur 100 comporte un processeur 101, une mémoire 102, une source de données 103, une interface utilisateur 105, une interface de communication 106 configurée pour communiquer de façon bidirectionnelle avec le client 110, un afficheur 107 adapté pour l'affichage de données à un utilisateur du serveur 100, ainsi qu'une mémoire de travail 109. Les différentes composantes du serveur 100 sont connectées à travers un bus de communication 104. La mémoire 102 comporte du code logiciel 108. La mémoire 109 est utilisée pour stocker et gérer les données à transmettre. Lorsque le processeur exécute le code logiciel 108, il conduit le serveur à mettre en œuvre un procédé selon un ou plusieurs exemples de réalisation décrits et comprenant le traitement de vides dans les données à transmettre comme expliqué plus en détail plus loin. Ces données proviennent par exemple de la source de données 103. La source de données 103 est par exemple l'organe métrologique du compteur proprement dit qui produit une valeur de la grandeur comptée. L'organe métrologique est par exemple en charge de mesurer et d'enregistrer une grandeur physique absolue (intensité d'un courant, pression d'un gaz) ou cumulative (énergie électrique ou volume d'un gaz qui a transité). Les données peuvent être obtenues de façon périodique ou apériodique ou comprendre une combinaison de données obtenues de façon périodique et apériodique. Le fait que des données soient généralement obtenues périodiquement n'exclut pas l'absence de données pendant des intervalles de temps plus ou moins longs (mise hors tension, pannes, intervalles de repos ou de données non représentatives...). Le réseau de communication est par exemple un media radio d'un des types 2G/3G/4G/LTE NB-IoT/LTE Cat-M1/LoRA ou autre.

Le DLMS ou 'Spécification de Messages Langage de Dispositif' ('Device Language Message Specification' en langue anglaise) comprend une série de standards développés et maintenus par l'Association des Utilisateurs DLMS ('DLMS UA') et standardisant les échanges de données de compteurs électriques ou autres. Le DLMS UA maintient notamment le 'Livre Bleu' COSEM (pour Modèle Sémantique Complet pour la Gestion de l'Energie ou 'Comprehensive Semantic Model for Energy Management' en langue anglaise). En particulier, le document 'DLMS UA 1000-1', version 15, partie 2, version 1.0 du 21 décembre 2021 décrit des éléments utilisés dans la poussée de données ('push' en langue anglaise) de la part d'un serveur vers un client et selon lequel le client accuse réception - ou acquitte - les données reçues. Le document introduit un mécanisme permettant, à chaque déclenchement périodique de l'envoi par poussée, de sélectionner une certaine quantité de données enregistrées à pousser à partir de la dernière donnée acquittée. Par exemple, il est possible de spécifier un intervalle de temps à partir de la dernière donnée acquittée (e.g. 'Trois jours complets après la dernière donnée acquittée'). Les différents choix sont décrits à la table 9 du document DLMS UA cité. Ceci permet de limiter la quantité d'un envoi individuel, afin de préserver le fonctionnement du réseau de transport et du client en charge de collecter et de traiter les données, et ne pas les surcharger en cas d'absence de communication prolongée et/ou sur un grand nombre d'équipements.

Selon un ou plusieurs exemples de réalisation, les données accumulées par le serveur 100 dans la mémoire 109 sont au moins en partie historisées, c'est à dire ordonnées dans le temps. Par 'ordonné dans le temps', on entend selon le mode de réalisation choisi qu'une information temporelle est associée à une donnée et que l'ordre des données est déterminé par l'information temporelle, ou simplement que les données figurent dans l'ordre d'obtention ou d'enregistrement. Par exemple, le serveur 100 échantillonne à intervalles réguliers l'organe métrologique 103 et stocke la valeur mesurée par cet organe dans sa mémoire, cette valeur y étant associée avec la valeur d'une horloge identifiant par exemple le moment de l'échantillonnage ou la période couverte par la valeur. La période est par exemple identifiée par une valeur d'horloge de la fin de la période. On obtient ainsi par exemple des courbes de charge dans le temps. D'autres informations peuvent être associées à ces deux valeurs.

Un serveur peut comporter plusieurs organes métrologiques donnant des valeurs respectives pour des grandeurs distinctes et ainsi associer plusieurs données à une seule valeur temporelle (voir par exemple les deux colonnes de droite du tableau 1 représenté ci-dessous). Les données sont stockées dans la mémoire par exemple dans des objets comportant un ou plusieurs attributs adaptés.

Si l'on sélectionne les données générées périodiquement sur un certain intervalle de temps (par exemple, un multiple entier d'une période comme une journée, la quantité de données sera toujours la même. Cependant, il existe des cas où la quantité de données sur une période peut différer, par exemple :
- quand le serveur a été mis hors tension pendant longtemps et que le processus de génération de données ne s'est donc pas exécuté ;
- suite à une remise à l'heure vers le futur impliquant un saut dans le temps important (par exemple, dans le cas où le serveur est remis en service et que la réserve d'énergie alimentant l'horloge temps réel était épuisée, ou qu'il n'avait pas été mis à l'heure).

Quand des entrées sont créées de manière apériodique - ce qui est par exemple le cas pour des entrées de journaux d'événement - le même problème se pose.

Le tableau 1 est un exemple de données normalement périodiques pouvant être produites par le compteur 103 proprement dit du serveur 100. A titre d'exemple, un serveur peut produire et stocker plusieurs milliers d'entrées pouvant couvrir, en fonction de la périodicité, par exemple plusieurs mois de fonctionnement.

**[Tableau 1]**

| **Horodatage('Timestamp')** | **Statut** | **Registre d'énergie importée** | **Registre d'énergie exportée** |
|---|---|---|---|
| Type : chaine d'octets encodant une date/heure | Type : entier 8 bits non signé pris comme un champ de bits de statut | | |
| | | Type : entier 32 bits non signé | Type : entier 32 bits non signé |
| ... | | | |
| 21/01/2022 00:00:00 | 0 | 2370 | 0 |
| 21/01/2022 01:00:00 | 0 | 2375 | 0 |
| 21/01/2022 02:00:00 | 0 | 2375 | 0 |
| 21/01/2022 03:00:00 | 0 | 2380 | 0 |
| 29/06/2022 09:00:00 | 127 => bit PDN=1 (indication que le compteur a été éteint dans la période précédant le stockage de cette entrée) | 2385 | 0 |
| ... | | | |

Dans le tableau 1, une entrée est représentée par une ligne et un élément de structure est représenté par une colonne.

Selon l'exemple du tableau, un échantillonnage est effectué toutes les heures et une journée normale comporte vingt-quatre entrées. Dans l'exemple, aucune entrée n'a été mémorisée entre le 21/01/2022 et le 29/06/2022 pour cause de mise hors tension du compteur. La sélection d'un intervalle de temps où le compteur était hors service (e.g. une demande de 01/02/2022 à 01/03/2022) retournera un tableau de zéro entrées.

A chaque déclenchement d'un envoi de données poussées, le serveur 100 évalue les valeurs associées à une liste d'attributs spécifiée dans un attribut paramétrant le mécanisme de poussée. Les valeurs retenues seront concaténées dans ce qu'on appelle un buffer - ou tampon - de poussée ('push buffer' en langue anglaise) et encapsulées dans une unité de données protocolaire de la couche applicative appropriée pour transmission au client.

Dans le cadre du DLMS, cette unité de données est libellée 'APDU DataNotification'.

Le contenu du buffer de poussée est obtenu en extrayant des valeurs d'attributs dans leur ensemble, ou encore partiellement. Une extraction partielle peut être réalisée en sélectionnant - dans les attributs adaptés - les valeurs à envoyer en appliquant un ou plusieurs filtres, par exemple des critères temporels tels des intervalles de temps, des index d'entrées ou encore des éléments de structure.

Le client produit un accusé de réception encore appelé 'acquittement' des données reçues. Le serveur connait ainsi la « dernière entrée acquittée » pour chacun des attributs concernés. Ceci permet de sélectionner et d'envoyer uniquement les données non encore acquittées à partir de cette entrée. La sélection des données se fait par exemple en précisant une profondeur de données, qui peut par exemple être définie par un intervalle temporel compté à partir de la dernière donnée acquittée, par exemple un nombre de périodes (« 3 jours complets de profondeur après la dernière entrée acquittée »). Selon certains modes de réalisation, la profondeur est définie par un intervalle temporel compté à partir de l'intervalle temporel précédent qui comporte la dernière donnée acquittée. Ceci permet de limiter la quantité de données d'un envoi individuel, afin de préserver le fonctionnement du réseau de transport et du client en charge de traiter les données, et ne pas les surcharger.

Pour chaque attribut concerné, en cas de succès d'envoi par poussée, c'est-à-dire si l'envoi est acquitté par le client, le pointeur de la dernière donnée acquittée sera mis à jour pour se placer sur la nouvelle dernière donnée acquittée. En cas d'échec, il restera à l'endroit avant envoi et servira de date d'origine pour la nouvelle sélection, qui pourra inclure de nouvelles données générées entre temps. On envoie ainsi les données les plus anciennes en priorité.

Une transmission se fait sous la forme d'un tableau. Un tableau est une structure de données comportant des entrées horodatées. Un exemple de structure d'un tel tableau est donné par le tableau 1. Une transmission sans données est matérialisée par un tableau vide, à savoir un tableau avec zéro entrées.

Dans les exemples qui suivent, les données considérées sont des entrées horodatées avec filtrage par sélection par rapport à la dernière donnée acquittée. Pour des raisons de clarté et de simplicité, on considère le cas d'un seul attribut dont les données sont à transmettre et qu'en principe, toutes les données enregistrées dans un intervalle sont à transmettre.

Un premier exemple de fonctionnement est comme suit :
- Le déclenchement d'une transmission en mode poussé se fait avec une périodicité journalière. Une transmission ne porte que sur des jours complets, la première transmission est donc faite le second jour, sur base des données des jours précédents. Le second jour est en effet toujours une période en cours. Dans le présent cas et à ce stade du procédé, il n'y a qu'une journée qui précède, à savoir le premier jour (qui est une journée pour laquelle les données sont complètes au second jour).
- La sélection des données se fait sur un maximum de deux jours complets après la dernière donnée acquittée (donc avec une profondeur maximale de deux jours). Selon le présent exemple, un jour incomplet car toujours en cours n'est pas sélectionné.
- Jour 2 : 1 journée de données à envoyer (Jour 1), envoi réussi.
- Jour 3 : 1 journée de données à envoyer (Jour 2), envoi en échec.
- Jour 4 : 2 journées de données à envoyer (Jour 2, Jour 3), envoi en échec.
- Jour 5 : 3 journées de données à envoyer (Jour 2, Jour 3, Jour 4) mais sélection limitée à (Jour 2, Jour 3), envoi réussi.
- Jour 6 : 2 journées de données à envoyer (Jour 4, Jour 5), envoi réussi.
- Jour 7 : 1 journée de données à envoyer (Jour 6), envoi réussi.
- ...

Après chaque acquittement de transmission, le pointeur de la dernière donnée acquittée est avancé par le serveur après la réception d'un accusé de réception de la part du client.

La profondeur maximale est choisie pour limiter la quantité de données dans une transmission en mode poussé à une taille raisonnable tout en permettant de rattraper des échecs de transmissions précédentes.

Un second exemple de fonctionnement est comme suit. On se place dans le cas où l'intervalle de temps entre les dernières données envoyées et le temps présent est important (plusieurs dizaines de périodes, par exemple) et où les données comportent des intervalles de temps où les données générées sont vides.
- Le déclenchement d'une transmission en mode poussé se fait avec une périodicité d'un jour.
- La sélection des données se fait avec une profondeur maximale de deux jours.
- On prend l'hypothèse que les données du Jour 1 ne sont pas vides (du Jour 1 à 00:00 au Jour 2 à 00:00), qu'à la suite d'un arrêt du serveur pendant plusieurs dizaines de jours, les données du Jour 2 et suivants sont vides et que le procédé de transmission périodique en mode poussé reprend le Jour 50.
- Jour 50 : envoi du Jour 1 (jusqu'au Jour 2 à 00:00 inclus) et du Jour 2 (vide).
- Jour 51 : envoi du Jour 2 (J2 à 00:00 exclus donc Jour 2 n'a aucune nouvelle donnée acquittée) et du Jour 3 (aucune nouvelle donnée acquittée).
- Jour 52 : Jour 2 (Jour 2 à 00:00 exclus donc Jour 2 aucune nouvelle donnée acquittée), Jour 3 (aucune nouvelle donnée acquittée).
- ...

En d'autres termes, un nombre d'intervalles vides au moins égal à la profondeur ou l'intervalle de sélection des données va faire tourner des transmissions à vide en boucle. Même si des données apparaissent le jour 50 ou suivant, ces données ne seront pas transmises car le pointeur vers la dernière donnée acquittée ne pourra pas avancer.

Une solution possible à ce problème consiste à avancer le pointeur de la dernière donnée acquittée après chaque transmission en mode poussé jusqu'à la fin de l'intervalle considéré. Dans le cadre du second exemple ci-dessus, à chaque transmission en mode poussé, le pointeur serait avancé de deux jours. Pour ramener le pointeur au plus près du temps présent, ceci implique de nombreuses transmissions à vide. Si l'intervalle de sélection a une profondeur de deux jours, le retard ne sera rattrapé que le 98^{e} jour.

Selon un ou plusieurs modes de réalisation, lorsqu'une transmission en mode poussé de données ordonnées est envisagée, le serveur va déterminer s'il y a ou non des données à transmettre. Cette détermination peut se faire par intervalles de sélection de données successifs.

Selon un premier mode de fonctionnement ('mode 1' dans ce qui suit), le dernier intervalle vide de données à transmettre avant un intervalle recouvrant une période de collecte de données en cours donnera lieu à une transmission en mode poussé. Cette transmission peut comporter une information indicative de l'absence de données à transmettre, par exemple sous la forme d'un tableau vide.

Selon un second mode de fonctionnement ('mode 2' dans ce qui suit), si aucune donnée à transmettre n'est déterminée, la transmission en mode poussé n'est pas effectuée, elle est annulée.

Dans les deux cas, si un intervalle vide de données à transmettre ou une succession de tels intervalles sont suivis d'un intervalle comportant des données, alors aucune transmission en mode poussé relative à l'intervalle ou à la succession d'intervalles vides de données à transmettre n'est effectuée et une transmission en mode poussé est effectuée pour l'intervalle non vide.

Il est à noter que des données peuvent avoir été enregistrées pour un intervalle, mais qu'aucune de ces données n'est à transmettre, par exemple sur base d'un ou plusieurs critères de sélection. Dans ce cas, l'intervalle est considéré comme 'vide'. S'il est déterminé des données à transmettre, ces données sont aussi appelées 'valeurs' à transmettre.

Selon le mode 1, le serveur analyse le contenu d'un intervalle situé dans le passé. S'il n'y a aucune valeur sélectionnée pour transmission dans cet intervalle, on passe à l'intervalle suivant. Le curseur sur le début d'intervalle considéré est cependant avancé jusqu'à la fin de l'intervalle de sélection considéré précédemment.

Le procédé est itéré jusqu'à ce que la fin de l'intervalle de sélection ne se situe plus dans le passé (en d'autres termes, jusqu'à ce que cette fin soit ultérieure au début de l'intervalle de temps en cours, cet intervalle de temps en cours étant donc incomplet), ou jusqu'à ce que l'intervalle de sélection contienne des valeurs à transmettre. Dans ce dernier cas, une transmission en mode poussé est effectuée et le pointeur sur la dernière entrée acquittée est avancé en rapport avec cette transmission à la suite d'un acquittement positif du client.

Ainsi, le serveur saute les intervalles de sélection vides de valeurs à transmettre, ces intervalles ne donnant pas lieu à une transmission en mode poussé.

Dans le cas où aucun intervalle de sélection jusqu'au temps présent ne comporte de données à transmettre, une transmission unique en mode poussé avec un tableau vide est effectuée pour l'ensemble des intervalles vides. Il est à noter qu'on mentionne ici un tableau vide car il s'agit là de la structure utilisée pour la transmission des données dans le cadre du présent exemple, mais selon d'autres exemples de réalisation, l'information indiquant qu'aucune valeur à transmettre n'a été déterminée peut être codée autrement.

Un avantage est que l'envoi d'une transmission en mode poussé de cette information permet au serveur d'informer le client que le serveur est toujours en fonctionnement, mais qu'aucune valeur à transmettre n'est disponible.

Selon un mode de réalisation, en mode 1, lorsque plusieurs attributs sont analysés et qu'aucun ne comporte de valeurs à transmettre, une information indicative de l'absence de valeurs à transmettre est transmise pour chacun des attributs.

Selon un second mode de transmission poussée, appelé 'mode 2' dans ce qui suit et par ailleurs similaire au mode 1, dans le cas où aucun intervalle de sélection jusqu'au temps présent ne comporte de valeurs à transmettre, aucune transmission en mode poussé n'est effectuée.

Un avantage est alors que de la bande passante réseau est économisée. Ceci peut être appréciable dans des applications dans lesquelles la génération de données est peu fréquente, comme dans le cas d'entrées dans des journaux d'événements peu fréquents. Par ailleurs, ce mode est également adapté à des serveurs fonctionnant sur pile car plus économe en énergie que le mode 1.

Un exemple de fonctionnement selon les modes 1 ou 2 basé sur les exemples précédents est comme suit :
Le déclenchement d'une transmission en mode poussé se fait avec une périodicité d'un jour.

La sélection des valeurs à transmettre se fait avec une profondeur maximale de deux jours.

Les valeurs à transmettre commencent au Jour 1 qui comporte des données mais les Jours 2 à 100 sont vides de données.

Le procédé de transmission périodique en mode poussé commence au Jour 50.
- Jour 50 : Envoi du Jour 1 et du Jour 2 (J1 est non vide).
- Jour 51 : Les Jours 3 et 4 sont vides de valeurs à transmettre et aucun envoi n'est fait.
- Jour 51 : Les Jours 5 et 6 sont vides de valeurs à transmettre et aucun envoi n'est fait.
- ...
- Jour 51 : Les Jours 47 et 48 sont vides de valeurs à transmettre et aucun envoi n'est fait.
- Jour 51 : Les Jours 49 et 50 sont vides et soit aucun envoi n'est fait (mode 2), soit un envoi avec un tableau vide est effectué (mode 1).

Le retard de transmission est ainsi rattrapé.

Par rattrapage du temps présent, on entend dans le cadre de l'exemple que la fin de l'intervalle de sélection est au plus à la fin de la période complète (ou clôturée) précédant la période en cours, cette dernière étant donc incomplète et étant susceptible d'être augmentée par de nouvelles données.

Selon un ou plusieurs modes de réalisation, un troisième mode de fonctionnement est défini, appelé 'mode 0'. Selon ce mode, la transmission d'un message en mode poussé est systématiquement effectuée suite au déclenchement d'une transmission - l'absence ou la présence de valeurs à transmettre n'influant pas sur la transmission.

Selon un ou plusieurs modes de réalisation, les modes 0, 1 et 2 peuvent être mis en œuvre par un même serveur. Il est alors prévu des moyens permettant de sélectionner un mode. Un mode de transmission est choisi, par exemple de manière automatique en fonction du contexte (par exemple commutation vers le mode 1 ou 2 suite au réveil après une panne ou un arrêt...) ou par un utilisateur, à travers une interface utilisateur gérée par l'intermédiaire du code logiciel 109.

Selon d'autres modes de réalisation, un serveur peut implémenter uniquement l'un des deux modes 1 ou 2, ou les deux.

Dans le cas où des données suivent une période pendant laquelle aucune donnée n'est générée, les modes 1 et 2 permettent de ne pas envoyer de message vide - le premier message envoyé contiendra des données. Par ailleurs, si aucune valeur à transmettre n'est présente après la dernière valeur acquittée, le nombre de messages vides envoyés sera, selon le mode, de zéro ou d'un seul, ce qui permet de limiter la bande passante utilisée.

Les modes 1 et 2, quand l'un de ces modes est identifié dans l'attribut, ne sont mis en œuvre que pour un ou plusieurs attributs d'objets comportant des données ordonnées avec sélection à partir de la dernière donnée acquittée. Des valeurs d'attributs autres du buffer de poussée sont soit transmises selon le mode par défaut, i.e. le mode 0, ou non transmises, comme cela sera détaillé plus loin.

Comme indiqué plus haut, le mode 2 peut aussi s'appliquer dans le cas où la sélection de données se fait par un nombre d'entrées - et non un intervalle de temps - après la dernière donnée acquittée.

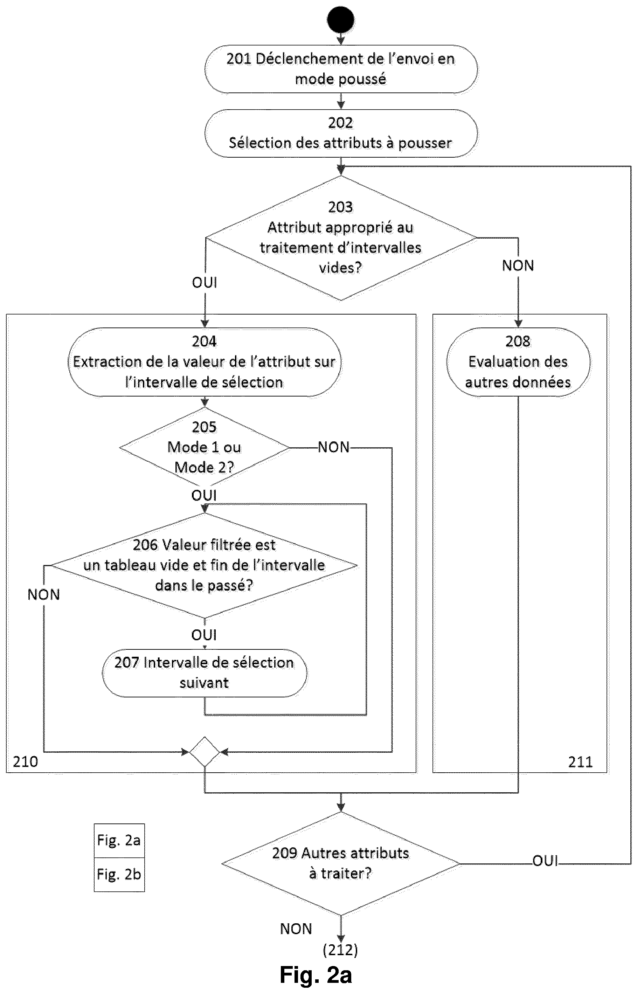

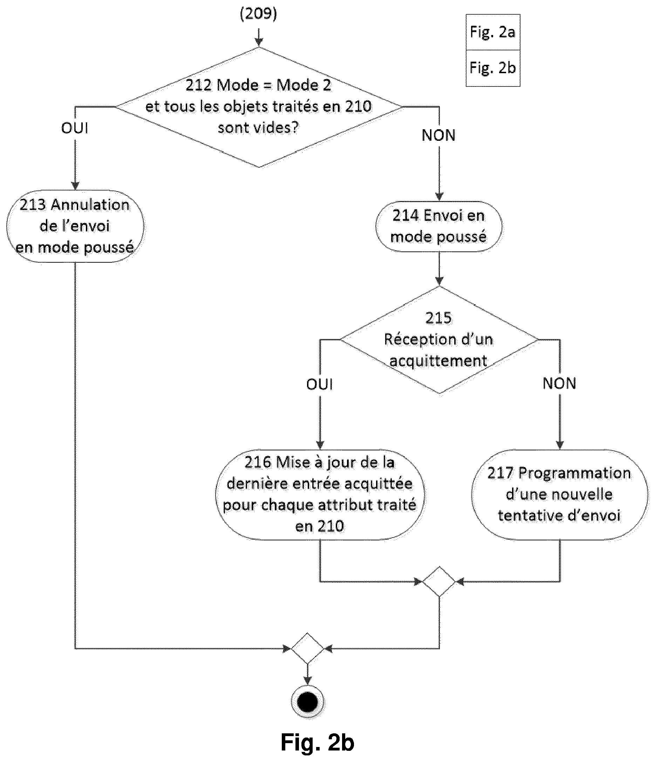

Les figures 2a et 2b combinées forment un algorigramme d'un procédé de poussée de données selon un ou plusieurs exemples de réalisation non limitatifs et mettant en œuvre les modes mentionnés ci-dessus.

Dans la figure 2a, en 201, un envoi de données en mode poussé est déclenché. Selon certains modes de réalisation, ce déclenchement est périodique, selon d'autres modes de réalisation, le déclenchement n'est pas périodique - il est par exemple lié à un événement déclencheur.

En 202, une sélection des attributs d'objets à pousser est réalisée. Cette sélection est par exemple basée sur une liste prédéfinie, un ou plusieurs critères de sélection... Un premier attribut parmi les attributs d'objets sélectionnés lors de l'étape 202 est ensuite analysé en 203 pour déterminer s'il est susceptible d'être traité pour des intervalles de sélection vides de données.

Selon le présent exemple de réalisation et comme indiqué précédemment, cette condition est remplie lorsque l'attribut contient des données ordonnées et sélectionnables sur une profondeur spécifiée après la dernière donnée acquittée par le client. Un traitement d'intervalles vides est appliqué à ces attributs dans la branche gauche 210 de l'algorigramme.

Les attributs qui ne répondent pas au critère du test en 203 sont évalués en 208, dans la branche droite 211. Les données autres contiennent par exemple des données non historisées.

Selon certains modes de réalisation, l'évaluation peut comprendre la décision de transmettre ou de ne pas transmettre les données autres. Ces données peuvent en effet être l'accessoire des données historisées traitées dans la branche 210, mais il peut y avoir peu de sens à utiliser de la bande passante pour transmettre certaines données autres en cas d'absence de données historisées.

La branche de traitement 210 et la sortie de l'évaluation en 208 se rejoignent en 209.

Selon un ou plusieurs exemples de réalisation, le traitement des intervalles vides de valeurs d'attribut à transmettre est comme suit : en cas de présence d'un attribut d'objet susceptible d'être traité, le contenu de cet attribut sur un premier intervalle de sélection sur une profondeur déterminée est analysé pour déterminer s'il contient des valeurs à transmettre (204). Il est déterminé si la transmission doit s'effectuer en mode poussé 1 ou 2 (test en 205). Si la transmission ne s'effectue pas en mode 1 ou 2, alors l'étape 209 est atteinte. Sinon, il est déterminé en 206 si la sélection est vide de valeurs à transmettre. Si c'est le cas, l'intervalle de sélection suivant est pris en considération (207) et il est de nouveau déterminé s'il est vide de valeurs transmettre en 206. La boucle 206 / 207 continue soit jusqu'à ce qu'un intervalle de sélection contienne des valeurs à transmettre ou que la fin de l'intervalle de sélection ne se situe plus dans le passé. La sortie de la boucle 206/207 mène au test 209. En 209, il est évalué si tous les attributs à pousser ont été pris en compte - si cela n'est pas le cas, le prochain attribut est sélectionné et le traitement reprend en 203.

Dans la figure 2b, si tous les attributs à pousser ont été pris en compte, il est déterminé si aucun des attributs traités dans la branche 210 ne contenait des valeurs d'attribut à transmettre. Si c'est le cas et si le mode poussé est le mode 2, alors aucun envoi en mode poussé n'est effectué (213) jusqu'au déclenchement suivant. Dans les autres cas, un envoi en mode poussé est effectué en 214, contenant des données à envoyer issues de l'une des deux branches 210 ou 211. Si aucune des deux branches n'a fourni de données à transmettre, une transmission à vide est effectuée. En cas de réception d'un acquittement du client (test positif en 215), une mise à jour de la dernière entrée acquittée est effectuée pour chacun des attributs traités dans la branche 210 (216). Si aucun acquittement n'est reçu, une nouvelle tentative d'envoi est programmée (217).

En référence au standard DLMS, l'étape 202 comprend par exemple la revue d'une liste d'attributs d'objets devant être poussés, cette liste étant définie par un attribut appelé 'push_object_list'. L'étape 203 comprend par exemple la vérification qu'un objet comporte un buffer de données correspondant à une classe d'interface dite 'profil générique' et avec sélection des données par rapport à la dernière entrée marquée comme acquittée, la profondeur de l'intervalle de sélection par rapport à la dernière donnée acquittée étant définie par une donnée de configuration appelée 'data_index' et définie par la table 9 du Livre Bleu mentionné précédemment.

Dans ce qui précède, divers avantages ont été décrits. Un mode de réalisation spécifique peut présenter un ou plusieurs de ces avantages, mais pas forcément tous les avantages. Certains modes de réalisation peuvent présenter un ou plusieurs avantages non décrits et/ou ne pas présenter d'avantages décrits.

### Annexe

Il est proposé de définir un attribut caractérisant la gestion des modes poussés dans le cadre d'un procédé de transmission en mode poussé et pouvant avoir l'une des trois valeurs suivantes :
- Mode 0=SAUT_DESACTIVE ('SKIP_DISABLED' en langue anglaise) :
   Mode par défaut. Le procédé de saut d'intervalles de sélection vides est désactivé.
- Mode 1=SAUT_ENVOIVIDE ('SKIP_EMPTYSEND' en langue anglaise) :
   Le procédé de saut d'intervalles de sélection vides est actif selon le mode 1.
- Mode 2=SAUT_PASENVOIVIDE ('SKIP_NOEMPTYSEND' en langue anglaise)
   Le procédé de saut d'intervalles de sélection vides est actif selon le mode 2.

### Dans le cadre du DLMS :

Une structure de données ordonnées avec sélection à partir de la dernière donnée acquittée est par exemple un buffer d'objets de classe 7 avec sélection à partir de la dernière donnée acquittée. Un buffer de classe DLMS/COSEM 7 est un buffer qui se remplit d'objets dits 'capturés' de manière périodique ou non, ces objets pouvant être accumulés par ordre d'arrivée ou triés en fonction d'un objet (par exemple une horodate).

### SIGNES DE REFERENCE

100 - Dispositif serveur
101 - Processeur
102 - Mémoire
103 - Compteur
104 - Bus de communication
105 - Interface utilisateur
106 - Interface de communication bidirectionnelle
107 - Affichage
108 - Code logiciel
109 - Mémoire de travail
110 - Dispositif client

## Revendications

1. Procédé de transmission en mode poussé mis en œuvre par un dispositif émetteur comprenant une mémoire comportant du code logiciel et un processeur qui, quand il exécute le code logiciel, conduit le dispositif à mettre en œuvre le procédé, **caractérisé en ce que** le procédé comprend :
(a) le déclenchement (201) d'une transmission, à un dispositif récepteur, de valeurs d'un attribut adapté pour contenir des données ordonnées dont les valeurs constituent la totalité ou un sous-ensemble, une transmission contenant au plus les valeurs d'un unique intervalle de sélection des données ordonnées;
(b) la vérification (204) que l'attribut ne comporte aucune valeur à transmettre pour l'ensemble de N intervalles adjacents de sélection de données d'un point de départ de sélection dans l'ordre des données et jusqu'à la fin de l'intervalle précédant l'intervalle comprenant une période de collecte de données en cours, avec N entier;
(c) si la vérification est positive, une transmission (214) d'un unique message indicatif de l'absence de valeurs pour les N intervalles.

2. Procédé selon la revendication 1, si la vérification est négative, la transmission (214) en mode poussé au dispositif récepteur d'un message comportant les valeurs du premier intervalle non vide de valeurs à transmettre, aucun message n'étant transmis pour les intervalles vides de valeurs à transmettre précédant ledit premier intervalle.

3. Procédé selon la revendication 2, comprenant, suite à la transmission du message comportant des valeurs, la réception (215) d'un acquittement de la part du dispositif récepteur et de la mise à jour (216) d'une information identifiant la dernière valeur acquittée pour l'attribut.

4. Procédé selon l'une des revendications 1 à 3, dans lequel le point de départ dans l'ordre des données est adjacent à la fin de l'intervalle comportant la valeur la plus récente acquittée par le dispositif récepteur.

5. Procédé selon l'une des revendications 1 à 3, dans lequel le point de départ dans l'ordre des données est compté à partir de la valeur la plus récente acquittée par le dispositif récepteur.

6. Procédé selon l'une des revendications 1 à 5, l'étape de vérification étant précédée d'une étape de filtrage des données de l'attribut selon un ou plusieurs critères en vue de déterminer lesdites valeurs à transmettre.

7. Procédé selon l'une des revendications 1 à 6, comportant :
- la vérification (209) si d'autres attributs sont à traiter ;
- dans l'affirmative, l'étape (b) est effectuée pour chaque autre attribut à traiter, la vérification pour l'étape (c) étant considérée comme positive en cas d'absence de valeurs à transmettre pour tous les attributs traités.

8. Procédé selon l'une des revendications 1 à 7, dans lequel l'unique message indicatif de l'absence de valeurs pour les N intervalles comporte un tableau vide.

9. Procédé selon l'une des revendications 1 à 8, avec N supérieur ou égal à deux.

10. Procédé selon l'une des revendications 1 à 9, dans lequel les données sont ordonnées de la donnée la plus ancienne à la donnée la plus récente.

11. Procédé selon la revendication 10, dans lequel les données comportent un horodatage, l'ordre étant fonction de l'horodatage.

12. Procédé selon l'une des revendications 1 à 11, dans lequel l'intervalle de sélection est l'un parmi un intervalle défini par un nombre de valeurs ou un intervalle défini par une durée.

13. Procédé selon l'une des revendications 1 à 12, un intervalle temporel comportant une ou plusieurs périodes de collecte de données correspondant à une profondeur de sélection des données.

14. Support d'enregistrement lisible par un dispositif muni d'un processeur, ledit support comprenant des instructions qui, lorsque le programme est exécuté par un processeur d'un dispositif, conduisent le dispositif à mettre en œuvre le procédé selon l'une des revendications 1 à 13.

15. Dispositif de communication (100) comprenant une mémoire (102) comportant du code logiciel (108) et un processeur (101) qui, quand il exécute le code logiciel, conduit le dispositif à mettre en en œuvre du procédé selon l'une des revendications 1 à 13.

## Patentansprüche

1. Übertragungsverfahren in einem Push-Modus, das durch eine Sendevorrichtung implementiert wird, umfassend einen Speicher, aufweisend einen Softwarecode, und einen Prozessor, der, wenn er den Softwarecode ausführt, die Vorrichtung veranlasst, das Verfahren zu implementieren,
**dadurch gekennzeichnet, dass** das Verfahren umfasst:
(a) Auslösen (201) einer Übertragung, an eine Empfangsvorrichtung, von Werten eines Attributs, das angepasst ist, um geordnete Daten zu enthalten, deren Werte das Ganze oder eine Teilmenge ausbilden, wobei eine Übertragung höchstens die Werte eines einzigen Intervalls für eine Auswahl der geordneten Daten enthält;
(b) Überprüfen (204), dass das Attribut keinen zu übertragenden Wert für die Menge von N aneinander liegenden Intervallen für eine Datenauswahl ab einem Auswahlstartpunkt in der Datenreihenfolge und bis zu dem Ende des Intervalls, das dem Intervall vorausgeht, aufweist, das einen aktuellen Datenerfassungszeitraum umfasst, wobei N eine Ganzzahl ist;
(c) falls das Überprüfen positiv ist, Übertragen (214) einer einzigen Nachricht, die das Fehlen von Werten für die N Intervalle anzeigt.

2. Verfahren nach Anspruch 1, wobei, falls das Überprüfen negativ ist, das Übertragen (214) einer Nachricht, aufweisend die Werte des ersten nicht leeren zu übertragenden Werteintervalls, in dem Push-Modus an die Empfangsvorrichtung erfolgt, wobei für die leeren zu übertragenden Werteintervalle, die dem ersten Intervall vorausgehen, keine Nachricht übertragen wird.

3. Verfahren nach Anspruch 2, umfassend im Anschluss an das Übertragen der Nachricht, aufweisend die Werte, das Empfangen (215) einer Bestätigung seitens der Empfangsvorrichtung und das Aktualisieren (216) einer Information, die den letzten bestätigten Wert für das Attribut identifiziert.

4. Verfahren nach einem der Ansprüche 1 bis 3, wobei der Startpunkt in der Reihenfolge der Daten an dem Ende des Intervalls liegt, aufweisend den letzten durch die Empfangsvorrichtung bestätigten Wert.

5. Verfahren nach einem der Ansprüche 1 bis 3, wobei der Startpunkt in der Reihenfolge der Daten von dem letzten durch die Empfangsvorrichtung bestätigten Wert gezählt wird.

6. Verfahren nach einem der Ansprüche 1 bis 5, wobei dem Überprüfungsschritt ein Schritt eines Filterns von Daten des Attributs gemäß einem oder mehreren Kriterien vorausgeht, um die zu übertragenden Werte zu bestimmen.

7. Verfahren nach einem der Ansprüche 1 bis 6, aufweisend:
- Überprüfen (209), ob weitere Attribute zu verarbeiten sind;
- wenn ja, wird Schritt (b) für jedes weitere zu verarbeitende Attribut durchgeführt, wobei das Überprüfen für Schritt (c) als positiv gewertet wird, in dem Fall, dass für sämtliche der verarbeiteten Attribute keine zu übertragenden Werte vorliegen.

8. Verfahren nach einem der Ansprüche 1 bis 7, wobei die einzige Meldung, die das Fehlen von Werten für die N Intervalle anzeigt, eine leere Tabelle aufweist.

9. Verfahren nach einem der Ansprüche 1 bis 8, wobei N größer als oder gleich zwei ist.

10. Verfahren nach einem der Ansprüche 1 bis 9, wobei die Daten von den ältesten Daten bis zu den aktuellsten Daten geordnet werden.

11. Verfahren nach Anspruch 10, wobei die Daten einen Zeitstempel aufweisen, wobei die Reihenfolge von dem Zeitstempel abhängig ist.

12. Verfahren nach einem der Ansprüche 1 bis 11, wobei das Auswahlintervall eines aus einem Intervall, das durch eine Anzahl von Werten definiert ist, oder einem Intervall ist, das durch eine Dauer definiert ist.

13. Verfahren nach einem der Ansprüche 1 bis 12, ein Zeitintervall aufweisend einen oder mehrere Datenerfassungszeiträume, die einer Datenauswahltiefe entsprechen.

14. Aufzeichnungsmedium, das durch eine Vorrichtung lesbar ist, die mit einem Prozessor versehen ist, das Medium umfassend Anweisungen, die, wenn das Programm durch einen Prozessor einer Vorrichtung ausgeführt wird, die Vorrichtung veranlassen, das Verfahren nach einem der Ansprüche 1 bis 13 zu implementieren.

15. Kommunikationsvorrichtung (100), umfassend einen Speicher (102), aufweisend den Softwarecode (108), und einen Prozessor (101), der, wenn er den Softwarecode ausführt, die Vorrichtung veranlasst, das Verfahren nach einem der Ansprüche 1 bis 13 zu implementieren.

## Claims

1. A method for transmission in push mode, implemented by a transmitting device comprising a memory comprising software code and a processor which, when executing the software code, causes the device to implement the method, **characterized in that** the method comprises:
(a) triggering (201) a transmission, to a receiving device, of values of an attribute adapted to contain ordered data whose values constitute all or a subset, a transmission containing at most the values of a single selection interval of the ordered data;
(b) verifying (204) that the attribute has no value to be transmitted for all among the N adjacent data selection intervals from a selection starting point in the order of the data to the end of the interval preceding the interval comprising a current data collection period, with N being an integer;
(c) if the verification is positive, transmitting (214) a single message indicative of the absence of values for the N intervals.

2. The method according to claim 1, if the verification is negative, the transmission (214) in push mode, to the receiving device, of a message comprising the values of the first interval that is not empty of values to be transmitted, no message being transmitted for the intervals empty of values to be transmitted preceding said first interval.

3. The method according to claim 2, comprising, following the transmission of the message comprising values, the receipt (215) of an acknowledgment from the receiving device and the updating (216) of information identifying the last value acknowledged for the attribute.

4. The method according to one of the claims 1 to 3, wherein the starting point in the order of the data is adjacent to the end of the interval comprising the most recent value acknowledged by the receiving device.

5. The method according to one of the claims 1 to 3, wherein the starting point in the order of the data is counted from the most recent value acknowledged by the receiving device.

6. The method according to one of the claims 1 to 5, the verification step being preceded by a step of filtering the data of the attribute according to one or more criteria in order to determine said values to be transmitted.

7. The method according to one of the claims 1 to 6, comprising
- verifying (209) whether other attributes are to be processed;
- in the affirmative, step (b) is carried out for each other attribute to be processed, the verification for step (c) being considered positive in case of absence of values to transmit for all attributes processed.

8. The method according to one of the claims 1 to 7, in which the single message indicative of the absence of values for the N intervals comprises an empty table.

9. The method according to one of the claims 1 to 8, where N is greater than or equal to two.

10. The method according to one of the claims 1 to 9, wherein the data are ordered from the oldest item of data to the most recent item of data.

11. The method according to claim 10, wherein the data comprise a timestamp, the order being a function of the timestamp.

12. The method according to one of the claims 1 to 11, wherein the selection interval is either an interval defined by a number of values or an interval defined by a duration.

13. The method according to one of the claims 1 to 12, wherein a time interval comprises one or more data collection periods, corresponding to a data selection depth.

14. A storage medium readable by a device provided with a processor, said medium comprising instructions which, when the program is executed by a processor of a device, cause the device to carry out the method according to one of claims 1 to 13.

15. A communication device (100) comprising a memory (102) comprising software code (108) and a processor (101) which, when it executes the software code, causes the communication device to carry out the method according to one of claims 1 to 13.
